# EUROPEAN PATENT SPECIFICATION

(11) **EP 2 508 390 B1**
(45) Date of publication and mention of the grant of the patent: **22.01.2014**
(21) Application number: 11425096.2
(22) Date of filing: 08.04.2011
(51) Int. Cl.: B60P 3/12

(54) **System in particular for recovering broken-down vehicles**
System insbesondere für Abschleppen liegen gebliebene Fahrzeuge
Système en particulier pour la récupération des véhicules en panne

(43) Date of publication of application: 10.10.2012
(73) Proprietor: Omars S.p.A., 12100 Cuneo (IT)
(72) Inventor: Andreis, Renato, 12100 Cuneo (IT)
(74) Representative: Robba, Pierpaolo

(56) References cited:
- AU-B2- 606 074
- US-A- 4 679 978
- US-A- 5 326 216
- US-A- 5 672 042
- US-A1- 2003 231 944

## Description

### Technical field

The present invention refers to a system in particular for recovering broken-down vehicles.

### Prior art

It is known in the field to use systems for recovering broken-down vehicles.
US5672042 discloses an improved underlift assembly for attachment to a vehicle. The improved underlift assembly comprises a support arm coupled to the vehicle. A base is coupled to an end of the support arm, a boom base is pivotally attached to the base at a first pivot point and a boom is pivotally attached to the boom base at a second pivot point. A first actuator is coupled to the support arm and the boom base. The operation of the first actuator pivots the boom base with respect to the support arm. A second actuator is coupled to the boom base and the boom. The operation of the second actuator pivots the boom with respect to the boom base. The first actuator is used to position the boom during lifting operation, and the second actuator is used to position the boom into a folded rest position.
AU606074 discloses a multi-function wrecker including an elongated vehicle chassis for support from the ground having front and rear ends, an elongated upright support member including upper and lower sections telescoped with respect to each other for relative extendible and retractable movement, first pivot means mounting the upper section from the rear end of the chassis for pivotal motion relative thereto about a first horizontal axis extending transversely of the chassis and the upper section at an elevation spaced above portions of the chassis, said upper section extending downwardly below the axis, the support member is pivotal between a generally vertical lowered position and a raised inclined position with the lower section swung outwardly and upwardly from the vehicle rear end, a combined lift and tow arm having a base and free end, angularly displaceable second pivot means mounting the base end from a lower portion of the lower section for pivotal motion relative thereto about a second horizontal axis extending transversely of the arm and lower section between first and second limit positions with the arm disposed at; generally ninety degrees relative to said support member in said first limit position and said free end of said arm projecting outwardly of the rear end of the chassis when the arm is in the first limit position and the arm disposed to the rear of and generally paralleling the support member when the arm is in the second limit position, the free end of said arm mounting a pair of lift means for engaging and lifting opposite side portions of a vehicle and spaced from the rear end of said chassis, first force means connected between the chassis and the upper section for swinging said support member between the lowered and raised position thereof, the first force means comprising an extensible cylinder connected to the support member at one end and to the chassis at the cylinder's extended distal end wherein the connections are positioned below the first pivot means.
US2003/231944 relates to an improved wheel-lift assembly that includes an adjustable wheel engaging apparatus, or wheel cradle which includes a wheel cradle that is adjustable in several positions, thus allowing for adjustment for various sizes of automobiles and tires. The adjustable wheel cradle reduces the chance that the oil pan or transmission of a target automobile will be damaged during transport. The adjustable wheel cradle is formed using a pair of substantially L-shaped rotatable lifting arms, a pair of support arms and a pivotable crossbar which form two substantially U-shaped configurations for receiving the front or rear tires of a target automobile. The L-shaped lifting arms are laterally displaceable. These lifting arms can be used to adjust the size of the wheel cradle when they are extended or shortened by sliding the lifting arms on a pair of support arms.
Nevertheless, the known systems suffer from several drawbacks, particularly regarding size during the movement of the recovery vehicle on which such systems are mounted.

### Summary of the invention

One object of the present invention is to obtain a system of the abovementioned type capable of reducing the size of the recovery vehicle on which the system is mounted, particularly when such system is not operative.

According to the present invention, this and other objects are achieved by means of a system according to the enclosed claim 1.

A further advantage that can be obtained in an optional manner according to the present invention is due to that it allows the installation of the above mentioned system in an arrangement closer to the rear axle of the vehicle with respect to that currently known in the field. Therefore, there is a substantial reduction of the load acting on the rear axle of the vehicle on which the system is applied. Consequently, the vehicle can be lightened at the front axle, since a lower load must be exerted on the latter in order to counterbalance the load acting on the rear axle. In addition, the rear part of the frame of the vehicle on which the system is installed can project less backwardly beyond the rear axle. In this manner, a further reduction is obtained of the overall size of the vehicle on which the system can be installed.

It should be intended that the enclosed claims constitute an integral part of the technical teachings provided in the present description with regard to the present invention.

### Brief description of the drawings

Further characteristics and advantages of the present invention will be clearer from the following detailed description, given as a merely not-limiting example, with reference to the enclosed drawings, in which:
- Figure 1 is a perspective view of an exemplary embodiment of a system for recovering broken-down vehicles according to the present invention;
- Figure 2 is a perspective view of the system shown in figure 1, but illustrated in another arrangement;
- Figure 3 is a perspective view of a part of the system shown in the preceding figures;
- Figure 4 is a partially sectioned view on a longitudinal plane of the part of the system shown in figure 3 but represented in a different arrangement;
- Figures 5 - 7 are side elevation views which represent a sequence of several of some of the arrangements that can be assumed by the system shown in the preceding figures when it is mounted on a recovery vehicle;
- Figure 8 is a partially exploded and side elevation view of an embodiment variant of the system shown in the preceding figures; and
- Figure 9 is an exploded plan view of a towing device borne by the system shown in figure 8.

### Detailed description of the invention

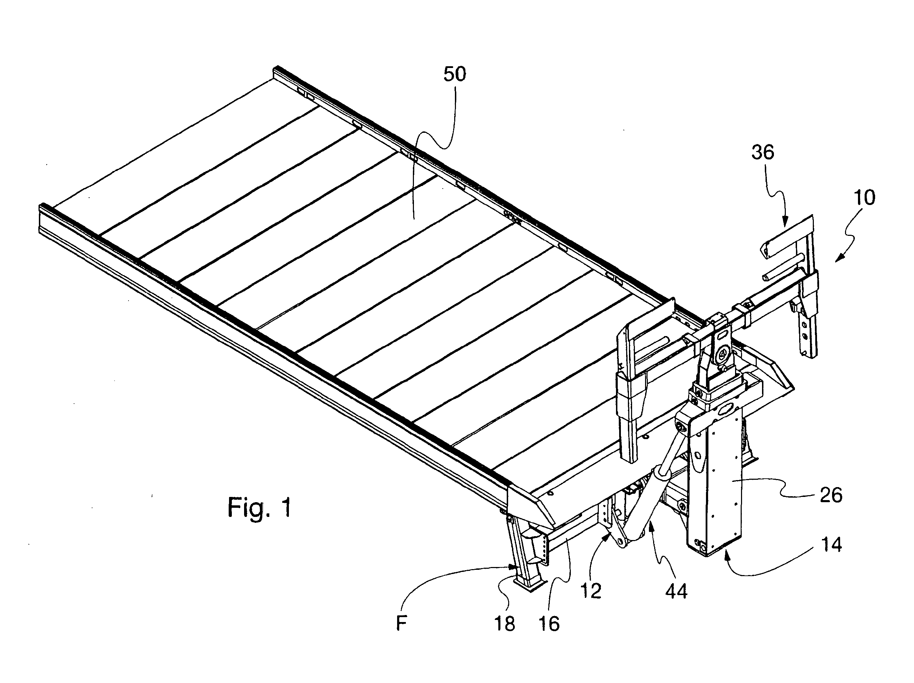

With particular reference to figure 1, the numeral 10 indicates an exemplary embodiment of a system for recovering broken-down vehicles according to the invention.

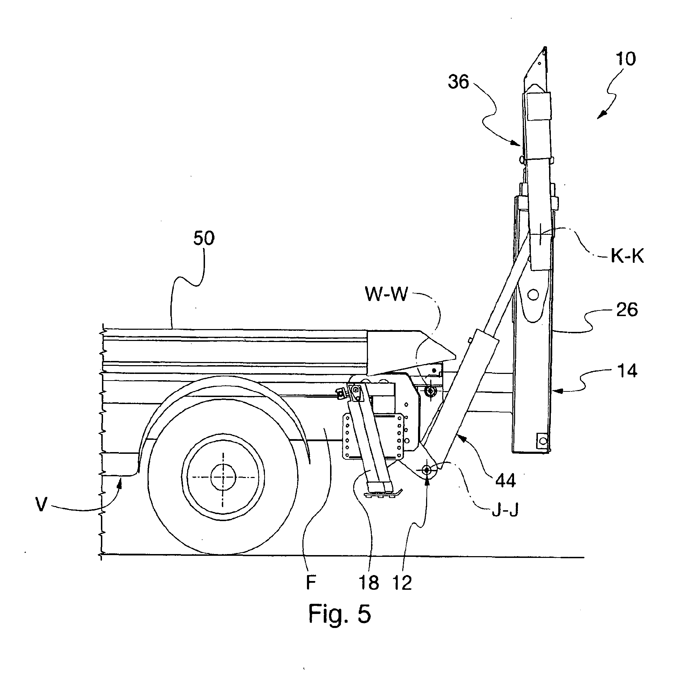

The system 10 is intended to be mounted on the frame F of a recovery vehicle V (see figures 5 - 7), such as for example a tow truck. In the illustrated embodiment, the system 10 is mounted on a rear part of the frame F, for example at the rear of said frame F.

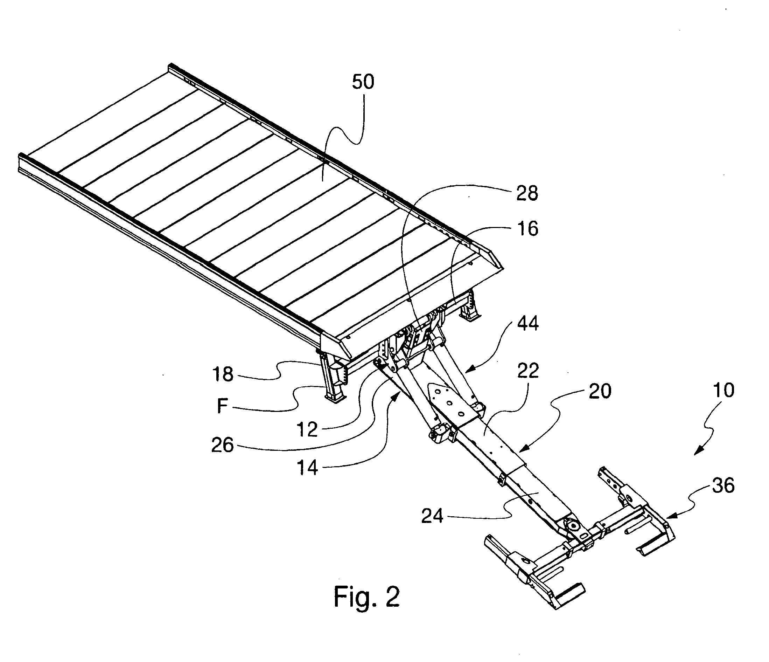

With particular reference to figures 1 and 2, the system 10 comprises a fixed support structure 12 intended to be mounted on the frame F, and a movable body 14 associated with the support structure 12 and capable of oscillating with respect thereto between a plurality of angular positions. For example, the movable body 14 has a predominantly longitudinal extension.

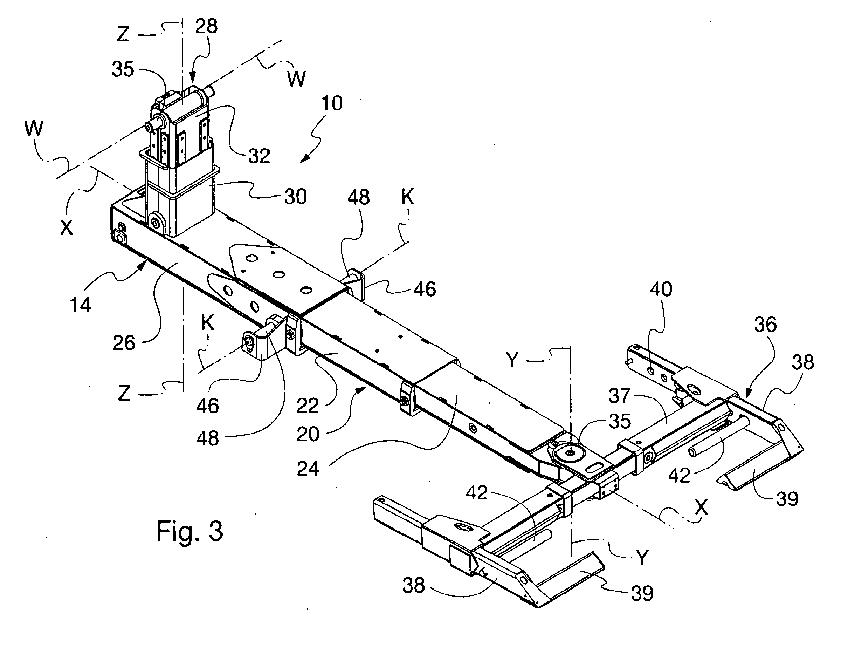

In connection with the present detailed description, use will be made of the terms "longitudinal", "transverse" and "lateral" for defining directions and orientations of different components with respect to the movable body 14 of the system 10. It is intended that the aforesaid terms are to be interpreted as follows:
- the term "longitudinal" is referred to a direction or axis substantially coinciding with or parallel to the longitudinal axis indicated with X-X in figure 3;
- the term "transverse" is referred to a direction or axis substantially perpendicular to the longitudinal axis X-X and substantially coinciding with or parallel to the transverse axis Z-Z illustrated in figure 3; and
- the term "lateral" is referred to a direction or axis substantially perpendicular to the longitudinal axis X-X and to the transverse axis Z-Z and substantially coinciding with or parallel to the lateral axis W-W illustrated in figure 3.

In the illustrated embodiment, the support structure 12 includes a support bar 16 arranged in a lateral direction and connected on opposite sides to projections 18 borne by the frame F and preferably projecting towards the bottom of the vehicle V.

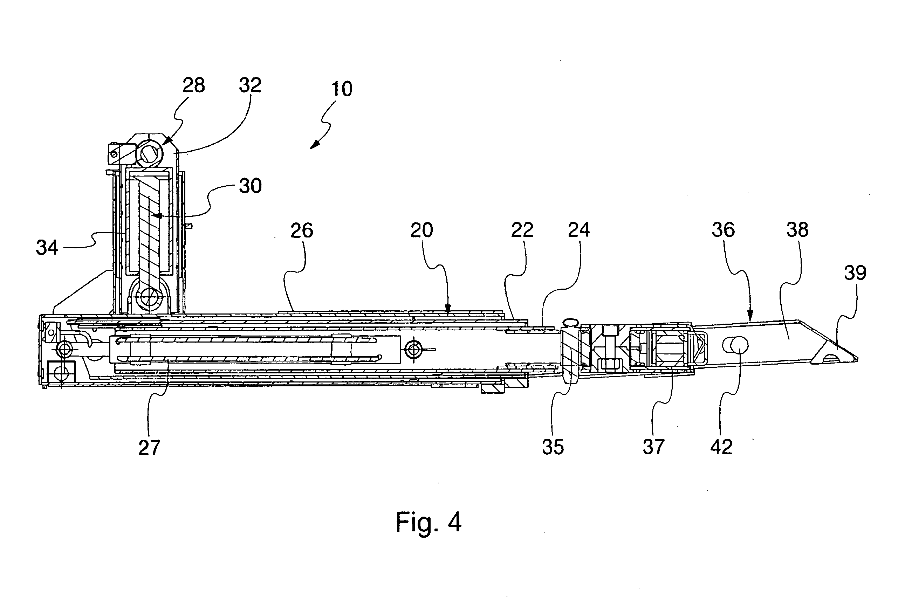

With particular reference to figures 2 and 3, the system 10 preferably comprises a longitudinal extensible device 20 connected with the movable body 14 and configured to be extended in a controlled manner between a retracted state (figures 1 and 4) and an extended state (figures 2 and 3) in a longitudinal direction or axis X-X with respect to the movable body 14. The longitudinal extensible device 20 achieves the function of an appendage which allows longitudinally extending the movable body 14 in accordance with operating requirements.

Preferably, the longitudinal extensible device 20 is of telescopic type, e.g. it includes a proximal tubular element 22 and a distal tubular element 24 adapted to slide inside each other.

In a preferred manner, the movable body 14 has a longitudinal section 26. In a further preferred manner, the longitudinal section 26 is hollow and the longitudinal telescopic device 20 (e.g. the relative tubular elements 22, 24) is able to slide therein. For example, the longitudinal extensible device 20 also comprises an actuator 27 (visible in figure 4) of type per se known to a man skilled in the art of the field and capable of controlling the movement of the tubular elements 22 and 24 through the longitudinal section 26. Preferably, the actuator 27 provides for an actuation of linear type, e.g. a fluidly-controlled, double-acting cylinder.

With particular reference to figures 2 to 4, the system 10 also comprises a transverse appendage 28 hinged on one side to the support structure 12 and integrally fixed in rotation on the other side to the movable body 14, in a manner so as to allow the oscillation of the movable body 14 about the support structure 12, e.g. at a lateral oscillation axis W-W (figure 3). The transverse appendage is a transverse extensible device 28 hinged on one side to the support structure 12, fixed to the movable body 14, and configured to be extended in a controlled manner between a retracted state (figures 1 and 4-6) and an extended state (figures 2 and 3) in a transverse direction or axis Z-Z (figure 3) with respect to the movable body 14. The transverse extensible device 28 allows not only the oscillation of the movable body 14 with respect to the support structure 12 about the lateral oscillation axis W-W, but it also allows transversely moving the movable body 14 away from the support structure 12, i.e. away from the lateral oscillation axis W-W parallel to the transverse axis Z-Z.

In a preferred manner, the movable body 14 has a transverse section 30 connected with the longitudinal section 26, from which the transverse appendage 28 is extended along the axis Z-Z. Preferably, the longitudinal section 26 has a predominant extension with respect to the transverse section 30.

With particular reference to figures 3 and 4, the transverse extensible device 28 is preferably of telescopic type. More preferably, the transverse section 30 is hollow and the transverse extensible device 28 comprises a tubular element 32 adapted to slide inside the cavity defined by the transverse section 30. Advantageously, the transverse extensible device 28 also comprises an actuator 34 of type *per* se known to a man skilled in the art of the field and capable of controlling the movement of the tubular element 32 inside the transverse section 30. Preferably, the actuator provides for an actuation of linear type, e.g. a fluidly-controlled, double-acting cylinder 34. In a further preferred manner, the transverse extensible device 28 is hinged to the support structure 12 at the tubular element 32. More preferably, projecting from laterally opposite sides of the tubular element 32 are the ends of an oscillation pin 35, by means of which the hinging between the support structure 12 and the transverse extensible device 28 is achieved.

The system 10 also comprises a fork group 36 associated with the movable body 14 and arranged for lifting the front wheels of a broken-down vehicle. In the illustrated embodiment, the fork group 36 is connected with the movable body 14 through the longitudinal extensible device 20. Preferably, the fork group 36 is rotatably mounted, e.g. pivoted by means of a pin 35, with respect to the longitudinal extensible device 20 about a transverse yaw axis Y-Y (figure 3) substantially transverse to the longitudinal sliding axis X-X of the longitudinal extensible device 20. Advantageously, the fork group 36 is mounted at the distal tubular element 24.

With reference to figure 3, the fork group 36 is substantially of a type known in the field and has, for example, a substantially yoke-like shape defined by a bar 37 oriented in lateral direction and with its own extension adjustable. At the ends of such bar 37, two arms 38 oriented in longitudinal direction are slidably mounted in an adjustable manner. Each of the arms 38 bears a respective lateral extension 39 projecting inwardly and a plurality of lateral seats 40 in which a pin 42 can be housed. The pin 42 is inserted in one of the lateral seats 40 on the basis of the size of the front wheels of the broken-down vehicle to be lifted. Therefore, the lateral extensions 39 and the pins 42 facing each other define respective housings for the front wheels of the broken-down vehicle to be lifted, and the extension of the bar 37 is adjusted on the basis of the width of the axle of the aforesaid broken-down vehicle.

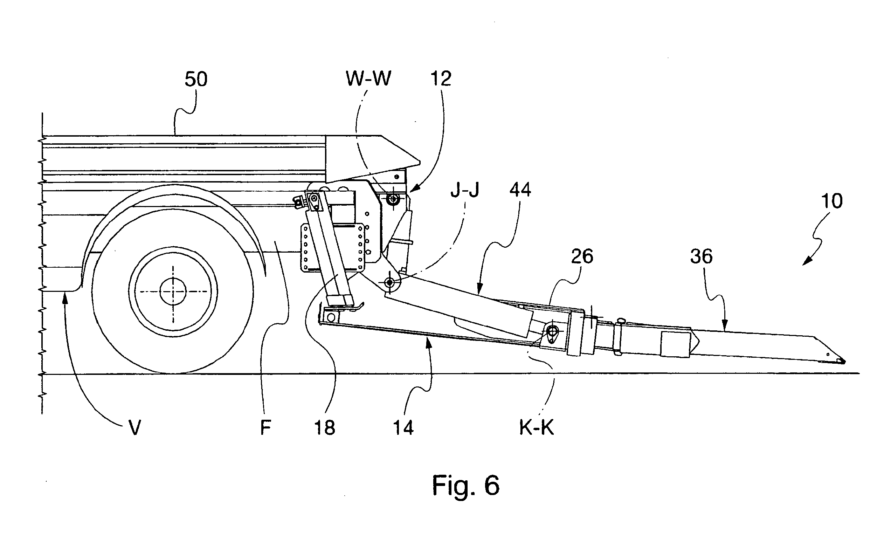

The system 10 also comprises a pair of lifting actuators 44. Each of the lifting actuators 44 is hinged on one side to the support structure 12, e.g. about a lateral hinging axis J-J (figure 5), and on the other side to the movable body 14, e.g. about a further lateral hinging axis K-K (figures 3 and 5). In addition, each of the lifting actuators 44 is configured to be arranged between an extended state (figures 1 and 5) and a retracted state (figures 2 and 6) in a manner such to control the angular position of the movable body 14 with respect to the support structure 12, e.g. about the lateral axis W-W. Preferably, the lifting actuators 44 are situated on laterally opposite sides with respect to the movable body 14. In the illustrated embodiment, the distal end of the movable body 14 has, for example on the distal end of the longitudinal section 26, a pair of flanges 46 (figure 3) projecting from two laterally opposite sides, at which the lifting actuators 44 are hinged. Optionally, each of the flanges is a folded portion 46, from which a respective hinging pin 48 projects that is connected to the movable body 14, e.g. to the longitudinal section 26. The hinging pins 48 allow the rotatable connection of the lifting actuators 44 with the movable body 14 about the lateral hinging axis K-K.

As a man skilled in the art is capable of appreciating from the drawings, the lifting actuators 14 operatively contribute to moving the lateral hinging portion J-J (which remains in fixed position on the support structure 12) and the further lateral hinging axis K-K (which is movable according to the state of the lifting actuators 44) away from each other; in this manner, they control the movable body 14 in rotation about the lateral oscillation axis W-W. Preferably, as is visible in figure 5, the lateral hinging axis J-J is situated below the lateral oscillation axis W-W when the system 10 is mounted on the vehicle V.

Preferably, the system 10 also comprises a platform 50 slidably mounted on the frame F and arranged to receive a broken-down vehicle on the top thereof. The platform 50 can be moved into a retracted position (shown in figure 1), in which it does not project substantially beyond the frame F, and an extended position (not shown), in which it projects beyond the frame F in the direction of the system 10 in order to be able to receive the broken-down vehicle on the recovery vehicle.

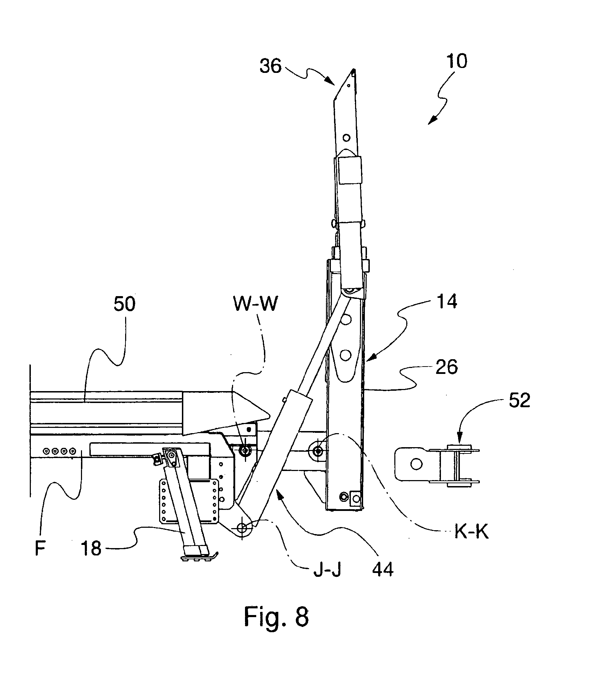

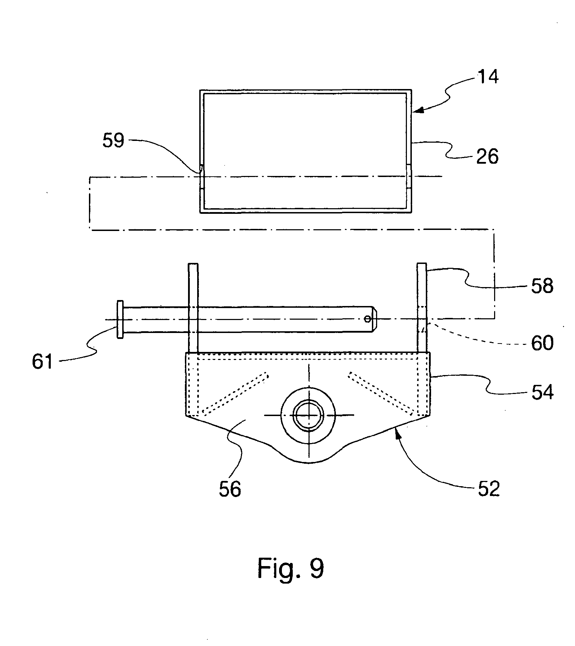

According to a preferred variant of the invention shown in figures 8 and 9, the system 10 includes a towing device 52. As represented in figure 8, the towing device 52 is for example mounted onto the movable body 14, preferably onto the longitudinal section 26. In the illustrated variant, the towing device 52 is mounted at the longitudinal end of the movable body 14 situated on the opposite side with respect to the fork group 36. Preferably, the towing device 52 includes a U-shaped connection structure 54 having a central body 56 and a pair of branches 58 which enclose and are fixed to the movable body 14, e.g. laterally surrounding the movable body 14. More preferably, the longitudinal section 26 has a pair of lateral holes 59, the branches 58 of the connection structure 54 have a pair of corresponding lateral holes 60, and the towing device 52 includes a lateral pin 61 intended to be inserted through the lateral holes 59 and the lateral openings 60 in a manner so as to allow the coupling between the towing device 52 and the movable body 14. In addition, the towing device 52 for example comprises a winch known in the field (not illustrated). Preferably, the winch includes a hook in combination with a tow rope or chain mounted on a rotatable cylinder about an axis substantially parallel to the longitudinal axis X-X (details not illustrated). In this manner, when the system 10 is situated in the upright arrangement, the device can also allow the towing of the vehicle without required use of the fork group 36.

The functioning of the system 10 illustrated in the drawings will now be described.

With reference to figures 1 and 5, the system 10 is situated in upright arrangement. In the aforesaid arrangement, the movable body 14 together with the fork group 36 is substantially erect and above the support structure 12 and the lifting actuators 44 are situated in their extended state, in which the hinging axes J-J and K-K are found at their maximum mutual distance. In addition, it can be observed that the longitudinal extensible device 20 and the transverse extensible device 28 are situated in the respective retracted states, in which the length assumed by the longitudinal extensible device 20 and the distance between the lateral oscillation axis W-W and the movable body 14 are minimal, respectively. In this manner, the overall size of the vehicle V on which the system 10 is mounted is advantageously reduced. Preferably, in the upright arrangement, the movable body 14 together with the fork group 35 is situated in a substantially perpendicular or vertical position with respect to the substantially horizontal load plane defined by the frame F.

In this arrangement of the system 10, the vehicle V is capable of traveling sections of road, e.g. urban zones and in particular historical centers of towns, where the space for maneuvering is rather minimal.

With reference to figure 6, the system 10 is situated in a first lowered arrangement. In the aforesaid arrangement, the movable body 14 together with the fork group 36 is substantially reversed and situated below the support structure 12, and the lifting actuators 44 are situated in their retracted state, in which the hinging axes J-J and K-K are moved closer to each other. In addition, it can be observed that the longitudinal extensible device 20 and the transverse extensible device 28 are in their respective retracted states.

In the aforesaid arrangement, the longitudinal extensible device 20 can be extended into an at least partially extended state, in a manner such that it allows arranging the fork group 36 in the best possible manner for lifting and towing the broken-down vehicle.

The passage of the system 10 from the upright arrangement into the first lowered arrangement occurs by actuating the actuators 44 and thus reducing the distance between the hinging axes J-J and K-K in a manner such that the movable body 14 preferably rotates at least 90° in clockwise direction (for the observer of figure 5). In other words, the angular position of the movable body 14 and of the associated fork group 36 is nearly parallel to - and below - the frame F when the system 10 is situated in the first lowered arrangement.

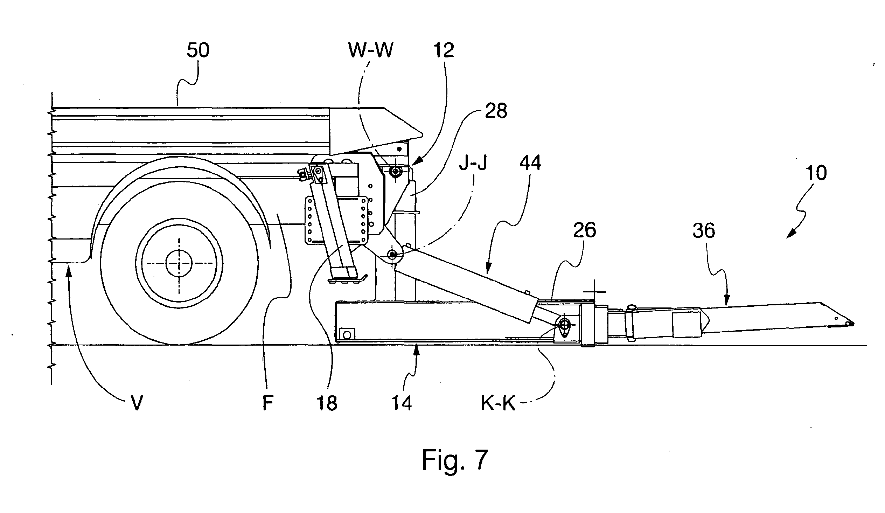

With reference to figure 7, the system 10 is situated in a second lowered position. In the aforesaid arrangement, the movable body 14 together with the fork group 36 is always reversed and situated below the support structure 12 but the lifting actuators 44 are situated in their partially extended state and the transverse extensible device 28 is situated in its partially extended state. Furthermore, it can be observed that the longitudinal extensible device 20 is instead in its retracted state.

Analogously to the first lowered arrangement, in this second lowered arrangement the longitudinal extensible device 20 can be extended between its extended state and its retracted state in order to arrange the fork group 36 in the best possible manner for lifting and towing the broken-down vehicle.

The passage of the system 10 from the first lowered arrangement to this second lowered arrangement occurs by actuating the actuators 44 and the transverse extensible device 28. In this manner, on one hand, the transverse extensible device 28 controls the moving away of the movable body 14 from the support structure 12, i.e. from the lateral oscillation axis W-W, imparting a rotation to the movable body 14 about the further hinging axis K-K (in counterclockwise direction for the observer of figure 6). And on the other hand, the actuators 44 increase the distance between the hinging axes J-J and K-K, imparting a rotation to the movable body about the oscillation axis W-W (in counterclockwise direction for the observer of figure 6). The coordinated, alternating actuation of the transverse extensible device 28 and of the actuators 44 thus allows bringing the movable body 14 into abutment against the road, as shown in the second lowered arrangement of figure 7.

In light of that stated above, the system 10 is arranged to take on a plurality of different lowered arrangements in which the movable body 14 and the associated fork group 36 are capable of assuming respective partially extended states. Therefore, the system 10 is capable of bringing the movable body 14 and the fork group 36 into abutment directly against the road traveled by the recovery vehicle V, or even below the road if the broken-down vehicle is found in a lower position.

Naturally, the principle of the invention remaining the same, the embodiments and details can be widely varied with respect to that described and illustrated above as a merely nonlimiting example, without departing from the scope of the invention as defined in the appended claims.

## Claims

1. A system (10) in particular for recovering a broken-down vehicle, intended to be mounted on the frame (F) of a recovery vehicle (V) and comprising:
- a fixed support structure (12) intended to be mounted on said frame (F);
- a movable body (14) associated with said support structure (12) and capable of oscillating with respect to said support structure (12) between a plurality of angular positions;
- a fork group (36) associated with said movable body (14) and arranged to lift the front wheels of said broken-down vehicle;
- at least one lifting actuator (44) hinged, on one side, to said support structure (12) and, on the other side, to said movable body (14), and configured to be arranged between an extended state and a retracted state, in a manner so as to control the angular position of said movable body (14) relative to said support structure (12);
- a transverse appendage (28) hinged, on one side, to said support structure (12) and associated, on the other side, with said movable body (14) in a transverse position with respect to the latter, in a manner so as to allow the rotation of said movable body (14) about said support structure (12);
said system (10) being able to be brought into:
- an upright arrangement in which said movable body (14) together with the fork group (36) is substantially erect and located above said support structure (12) and in which said at least one lifting actuator (44) is in extended state; and
- at least one lowered arrangement in which said movable body (14) together with said fork group (36) is substantially reversed and located below said support structure (12) and in which said at least one lifting actuator (44) is in retracted state, **characterized in that** said transverse appendage comprises a transverse extensible device (28) which is hinged, on one side, to said support structure (12), is fixed, on the other side, to said movable body (14), and is configured to be extended in a controlled manner between a retracted state and an extended state in a transverse direction with respect to said movable body (14) in a manner so as to adjust the distance between said support structure (12) and said movable body (14).

2. System according to claim 1, wherein said movable body (14) comprises a longitudinal section (26) associated with said fork group (36), and a transverse section (30) connected with said longitudinal section (26) and associated with said support structure (12).

3. System according to claim 2, wherein said transverse appendage (28) is connected between said transverse section (30) and said support structure (12).

4. System according to any one preceding claim, wherein in said upright arrangement, said transverse extensible device (28) is in retracted state.

5. System according to claim any one preceding claim, wherein in said at least one lowered arrangement, said transverse extensible device (28) is in retracted state.

6. System according to claim 5, wherein said system is arranged for assuming a plurality of lowered arrangements in which said transverse extensible device (28) is arranged to assume a plurality of at least partially extended states and said at least one lifting actuator (44) is arranged to assume a plurality of at least partially extended states.

7. System according to any one claim from any one preceding claim, wherein said transverse extensible device (28) is of telescopic type.

8. System according to claim 7, wherein said transverse section (30) is hollow and said transverse extensible device (28) is slidable in said transverse section (30).

9. System according to any one preceding claim, also comprising a longitudinal extensible device (20) connected between said movable body (14) and said fork group (36), configured to be extended in a controlled manner between a retracted state and an extended state in a longitudinal direction relative to said movable body (14) when said movable body (14) is in said at least one lowered position.

10. System according to claim 9, wherein said longitudinal extensible device (20) is of telescopic type.

11. System according to claim 10, wherein said longitudinal section (26) is hollow and said longitudinal extensible device (20) is slidable in said longitudinal section (26).

12. System according to any one preceding claim, also comprising a towing device (52) mounted on the movable body (14).

13. System according to claim 12, wherein said towing device (52) is mounted at the longitudinal end of said movable body (14) situated at an opposite side relative to said fork group (36).

14. A recovery vehicle (V) comprising a frame (F) on which a system (10) is mounted according to any one of the preceding claims.

## Patentansprüche

1. System (10) insbesondere für das Abschleppen eines liegen gebliebenen Fahrzeugs, dazu eingerichtet, an einem Chassis (F) eines Abschleppfahrzeugs (V) angebracht zu werden, und umfassend:
- eine feste Tragstruktur (12), die dazu eingerichtet ist, an diesem Chassis (F) angebracht zu werden;
- einen beweglichen Körper (14), der dieser Tragstruktur (12) zugeordnet ist und relativ zu dieser Tragstruktur (12) zwischen mehreren Winkelpositionen schwenkbar ist;
- eine Gabeleinheit (36), die diesem beweglichen Körper (14) zugeordnet ist und so angeordnet ist, um die Vorderräder des liegen gebliebenen Fahrzeugs anzuheben;
- mindestens einen Hubaktuator (44), der auf einer Seite an der Tragstruktur (12) und auf der anderen Seite an dem beweglichen Körper angelenkt ist und so ausgebildet ist, um zwischen einem ausgefahrenen Zustand und einem eingefahrenen Zustand in so einer Weise angeordnet zu werden, um die Winkelposition des beweglichen Körpers (14) relativ zu der Tragstruktur (12) einzustellen;
- einen Queransatz (28), der auf einer Seite an der Tragstruktur (12) angelenkt ist und auf der anderen Seite dem beweglichen Körper (14) in einer Querlage relativ dazu in so einer Weise zugeordnet ist, dass die Verschwenkung des beweglichen Körpers (14) um die Tragstruktur (12) ermöglicht wird;
wobei das System (10) gebracht werden kann:
- in eine aufrechte Konfiguration, bei der der bewegliche Körper (14) zusammen mit der Gabeleinheit (36) im Wesentlichen lotrecht ist und oberhalb der Tragstruktur (12) angeordnet ist und bei der sich der mindestens eine Hubaktuator (44) in dem ausgefahrenen Zustand befindet; und
- in mindestens eine abgesenkte Konfiguration, bei der der bewegliche Körper (14) zusammen mit der Gabeleinheit (36) im Wesentlichen heruntergeklappt ist und unterhalb der Tragstruktur (12) angeordnet ist und bei der sich der mindestens eine Hubaktuator (44) in dem eingefahrenen Zustand befindet, **dadurch gekennzeichnet, dass** der Queransatz (28) eine ausziehbare Quervorrichtung (28) umfasst, die auf einer Seite an der Tragstruktur (12) und auf der anderen Seite an dem beweglichen Körper (14) angelenkt ist und so ausgebildet ist, um in kontrollierter Weise zwischen einem eingefahrenen Zustand und einem ausgefahrenen Zustand in einer quer zu dem beweglichen Körper (14) verlaufenden Richtung so ausgezogen zu werden, um den Abstand zwischen der Tragstruktur (12) und dem beweglichen Körper (14) einzustellen.

2. System nach Anspruch 1, wobei der bewegliche Körper (14) einen der Gabeleinheit (36) zugeordneten Längsabschnitt (26) sowie einen mit dem Längsabschnitt (26) verbundenen und der Tragstruktur (12) zugeordneten Querabschnitt (30) umfasst.

3. System nach Anspruch 2, wobei der Queransatz (28) zwischen dem Querabschnitt (30) und der Tragstruktur (12) verbunden ist.

4. System nach irgendeinem der vorhergehenden Ansprüche, wobei sich die ausziehbare Quervorrichtung (28) bei der aufrechten Konfiguration in dem eingefahrenen Zustand befindet.

5. System nach irgendeinem der vorhergehenden Ansprüche, wobei sich die ausziehbare Quervorrichtung (28) bei der mindestens einen abgesenkten Konfiguration in dem eingefahrenen Zustand befindet.

6. System nach Anspruch 5, wobei das System so angeordnet ist, um eine Vielzahl von abgesenkten Konfigurationen einzunehmen, bei denen die ausziehbare Quervorrichtung (28) so angeordnet ist, um eine Vielzahl von mindestens teilweise ausgefahrenen Zuständen einzunehmen und der mindestens eine Hubaktuator (44) so angeordnet ist, um eine Vielzahl von mindestens teilweise ausgefahrenen Zuständen einzunehmen.

7. System nach irgendeinem der vorhergehenden Ansprüche, wobei die ausziehbare Quervorrichtung (28) von der teleskopischen Art ist.

8. System nach Anspruch 7, wobei der Querabschnitt (30) hohl ist und die ausziehbare Quervorrichtung (28) in dem Querabschnitt (30) verschiebbar ist.

9. System nach irgendeinem der vorhergehenden Ansprüche, weiter umfassend eine zwischen dem beweglichen Körper (14) und der Gabeleinheit (36) verbundene ausziehbare Längsvorrichtung (20), die derart ausgebildet ist, dass sie in kontrollierter Weise zwischen einem eingefahrenen Zustand und einem ausgefahrenen Zustand in einer Längsrichtung relativ zu dem beweglichen Körper (14) ausgezogen wird, wenn sich der bewegliche Körper (14) in der mindestens einen abgesenkten Konfiguration befindet.

10. System nach Anspruch 9, wobei die ausziehbare Längsvorrichtung (20) von der teleskopischen Art ist.

11. System nach Anspruch 10, wobei der Längsabschnitt (26) hohl ist und die ausziehbare Längsvorrichtung (20) in dem Längsabschnitt (26) verschiebbar ist.

12. System nach irgendeinem der vorhergehenden Ansprüche, weiter umfassend eine an dem beweglichen Körper (14) angebrachte Abschleppeinrichtung (52).

13. System nach Anspruch 12, wobei die Abschleppeinrichtung (52) an dem auf der der Gabeleinheit (36) abgewandten Seite angeordneten Längsende des beweglichen Körpers (14) angebracht ist.

14. Abschleppfahrzeug (V) umfassend ein Chassis (F), auf dem ein System (10) nach irgendeinem der vorhergehenden Ansprüche angebracht ist.

## Revendications

1. Un système (10) en particulier pour l'enlèvement d'un véhicule en panne, prévu pour être monté sur l'armature (F) d'un véhicule de dépannage (V) et comprenant :
- une structure de support fixe (12) prévue pour être montée sur ladite armature (F) ;
- un organe mobile (14) lié à ladite structure de support (12) et capable de pivoter par rapport à ladite structure de support (12) pour prendre plusieurs positions angulaires ;
- un groupe fourches (36) lié audit organe mobile (14) et disposé pour soulever les roues avant dudit véhicule en panne ;
- au moins un actuateur de levage (44) articulé à ladite structure de support (12) d'un côté et audit organe mobile (14) de l'autre côté et configuré pour prendre une position longue et une position courte, afin de commander la position angulaire dudit organe mobile (14) relativement à ladite structure de support (12) ;
- un appendice transversal (28) articulé d'un côté à ladite structure de support (12) et lié de l'autre côté audit organe mobile (14) dans une position transversale par rapport à ce dernier, de façon à permettre audit organe mobile (14) de pivoter par rapport à ladite structure de support (12) ;
ledit système (10) pouvant être :
- disposé dans une position redressée pour laquelle ledit organe mobile (14), et le groupe fourches (36) avec lui, est essentiellement droit et se tient au-dessus de ladite structure de support (12) et pour laquelle au moins un actuateur de levage (44) est en position longue ; et
- disposé dans au moins une position abaissée, pour laquelle ledit organe mobile (14), et ledit groupe fourches (36) avec lui, est essentiellement renversé et se tient au-dessous de ladite structure de support (12) et pour laquelle au moins un actuateur de levage (44) est en position courte, **caractérisé en ce que** ledit appendice transversal comprend un dispositif extensible transversal (28) articulé d'un côté à ladite structure de support (12), fixé de l'autre côté audit organe mobile (14) et configuré pour s'étendre d'une façon contrôlée entre une position courte et une position longue suivant une direction transversale par rapport audit organe mobile (14), de façon à ajuster la distance entre ladite structure de support (12) et ledit organe mobile (14).

2. Système selon la revendication 1, dans lequel ledit organe mobile (14) comprend une section longitudinale (26) liée audit groupe fourches (36) et une section transversale (30) liée à ladite section longitudinale (26) et liée à ladite structure de support (12).

3. Système selon la revendication 2, dans lequel ledit appendice transversal (28) est connecté entre ladite section transversale (30) et ladite structure de support (12).

4. Système selon l'une des revendications précédentes, dans lequel ledit dispositif extensible transversal (28) est en position courte lorsque le système est dans la position redressée.

5. Système selon l'une des revendications précédentes, dans lequel ledit dispositif extensible transversal (28) est en position courte lorsque le système est dans au moins une position abaissée.

6. Système selon la revendication 5, dans lequel ledit système est configuré pour prendre plusieurs positions abaissées dans lesquelles ledit dispositif extensible transversal (28) est configuré pour prendre plusieurs positions longues, au moins partiellement, et au moins ledit actuateur de levage (44) est configuré pour prendre plusieurs positions longues, au moins partiellement.

7. Système selon l'une des revendications précédentes, dans lequel ledit dispositif extensible transversal (28) est de type télescopique.

8. Système selon la revendication 7, dans lequel ladite section transversale (30) est creuse et ledit dispositif extensible transversal (28) coulisse dans ladite section transversale (30).

9. Système selon l'une des revendications précédentes, comprenant également un dispositif extensible longitudinal (20) connecté entre ledit organe mobile (14) et ledit groupe fourches (36), configuré pour s'étendre d'une façon contrôlée entre une position courte et une position longue, dans une direction longitudinale par rapport audit organe mobile (14) quand ledit organe mobile (14) est dans au moins une position abaissée.

10. Système selon la revendication 9, dans lequel ledit dispositif extensible longitudinal (20) est de type télescopique.

11. Système selon la revendication 10, dans lequel ladite section longitudinale (26) est creuse et ledit dispositif extensible longitudinal (20) coulisse dans ladite section longitudinale (26).

12. Système selon l'une des revendications précédentes, comprenant également un dispositif de remorquage (52) monté sur l'organe mobile (14).

13. Système selon la revendication 12, dans lequel ledit dispositif de remorquage (52) est monté à l'extrémité longitudinale dudit organe mobile (14) située du côté opposé au groupe fourches (36).

14. Un véhicule de dépannage (V) comprenant une armature (F) sur laquelle un système (10) selon l'une des revendications précédentes est monté.
